(19) Europäisches Patentamt / European Patent Office / Office européen des brevets

(11) **EP 2 075 264 B1**

(12) **EUROPEAN PATENT SPECIFICATION**

(45) Date of publication and mention
of the grant of the patent:
**28.09.2016 Bulletin 2016/39**

(51) Int Cl.:
**C08F 8/00** (2006.01)     **C08F 8/18** (2006.01)
**C08F 10/00** (2006.01)    **C08F 8/26** (2006.01)
**C08F 8/46** (2006.01)      **C08F 8/22** (2006.01)
**C08F 110/10** (2006.01)

(21) Application number: **08105940.4**

(22) Date of filing: **04.12.2008**

(54) **Method of forming polyalkene substituted carboxylic acid compositions**

Verfahren zum Bilden von polyalken-substituierten Carboxylsäure-Zusammensetzungen

Procédé de formation de compositions d'acide carboxylique substitué par un polyalkène

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **26.12.2007 US 964137**
**01.10.2008 US 242971**

(43) Date of publication of application:
**01.07.2009 Bulletin 2009/27**

(73) Proprietor: **Infineum International Limited
Abingdon
Oxfordshire OX13 6BB (GB)**

(72) Inventors:
• **Severt, Richard Joseph**
**Linden, NJ 07036 (US)**
• **Gutierrez, Antonio**
**Linden, NJ 07036 (US)**
• **Emert, Jacob**
**Linden, NJ 07036 (US)**
• **Venkatram, Ramdas**
**Linden, NJ 07036 (US)**
• **Baker, Allison Joan**
**Linden, NJ 07036 (US)**
• **Spencer, Jeremy Roger**
**Abingdon, Oxfordshire OX13 6BB (GB)**

(74) Representative: **Goddard, Frances Anna et al
Infineum UK Limited
PO Box 1
Milton Hill
Abingdon,
Oxfordshire OX13 6BB (GB)**

(56) References cited:
**EP-A- 0 432 941      EP-A- 0 899 276
US-A- 5 672 266      US-B2- 6 562 904**

**Description**

FIELD OF THE INVENTION

The invention is directed to a method of forming polyalkene substituted carboxylic acid, anhydride or ester compositions having minimized residual halogen contents. More specifically, the invention is directed to a method of forming polyalkene substituted carboxylic acid, anhydride or ester compositions having minimized residual halogen contents, in which polyalkene is subjected to halogen-assisted reaction with at least one olefinic monounsaturated mono- or dicarboxylic acid, anhydride or ester, in the presence of a controlled amount of a metal compound, preferably a metal salt, especially a polyalkene-soluble metal compound.

BACKGROUND OF THE INVENTION

Compositions derived by reacting polyalkene-substituted carboxylic acid, anhydride or ester compositions with amines, alcohols and/or reactive metal compounds are known to be useful additives that provide fuel and lubricating oils with improved dispersing, detergent and/or viscometric properties. The polyalkene-substituted carboxylic acid, anhydride or ester compositions are themselves useful as emulsifiers. Such polyalkene-substituted carboxylic acid, anhydride or ester compositions are commonly formed by halogen-assisted reaction of polyalkene and at least one olefinic monounsaturated mono- or dicarboxylic acid, anhydride or ester, most commonly maleic anhydride. Chlorine is the most commonly used and effective halogen. In a two-step process, as described for example, in U.S. Patent No. 3,219,666, a polyalkene is chlorinated until there is on average at least one chloro group for each polyalkene molecule. Chlorination can be achieved by simply contacting the polyalkene with chlorine gas until the desired amount of chlorine is incorporated into the polyalkene, usually at a temperature of about 75 to about 125°C. In the second step of the two-step chlorination process, the chlorinated polyalkene product of the first step is reacted with a molar equivalent, or a molar excess of α, β-unsaturated carboxylic acid, anhydride or ester, usually at a temperature of about 100 to about 200°C. Alternatively, and as described for example by U.S. Patent Nos. 3,215,707 and 3,231,587, a mixture of polyalkene and α, β-unsaturated carboxylic acid, anhydride or ester reactants can, in a single step process, be contacted with chlorine gas (e.g., by passing chlorine gas through the mixture with agitation) at an elevated temperature (e.g., 140°C or above).

Polyalkene-substituted carboxylic acid, anhydride or ester compositions synthesized via halogen (usually chlorine)-induced condensation of polyalkene and α, β-unsaturated carboxylic acid, anhydride or ester compound conventionally contain a residual chlorine content of 0.5 to 1 mass %, which corresponds to 5,000 to 10,000 parts per million (ppm) of chlorine. Thus, additives derived from polyalkene-substituted carboxylic acid, anhydride or ester compounds (acylating agents) are a source of organochlorine in fuel and motor oils. Due to environmental concerns and regulations, it has become desirable to eliminate, or at least reduce, the level of chlorine and other halogens in fuel and motor oil additives and other industrial products. One way to address concerns regarding residual halogen is to avoid the use of halogen altogether by using a thermal process wherein a polyalkene and olefinic, monounsaturated mono- or dicarboxylic acid, anhydride or ester are heated together without halogen assistance, optionally in the presence of a catalyst (a "thermal" or "ene" reaction). Such a method is described, for example, in U.S. Patent No. 3,361,673. However materials formed via the thermal route, in general, have a lower number of acylating groups per molecule. Another solution to the problem is to post-treat a halogen-containing product to remove halogen until the level of halogen in the product is at an acceptable level. Certain methods for accomplishing this are known. These methods, while capable of reducing the halogen content of the polyalkene substituted acylating agent, can also adversely reduce the number of acylating groups due to decarboxylation, manifested as a reduced saponification (SAP) number or level of active ingredient (AI), and can further increase the manufacturing time by requiring additional process steps (e.g., post-treatments or heat soaking).

U.S. Patent No. 4,943,671 to Dockner et al. describes a reductive dehalogenation process for reducing the halogen content of an organic halogen compound with formation of a hydrogen halide in which the organic halogen compound is reacted with a hydrocarbon in the presence of elemental carbon at elevated temperature, in the presence of an iron powder or iron compound co-catalyst.

U.S. Patent No. 5,489,390 to Sivik et al. describes a process for reducing the chlorine content of an organochlorine compound in which the organochlorine compound is mixed with (a) an acid selected from mineral acids other than HI and HBr, and organic acids having a pKa of less than about 2; and (b) a source of iodine or bromine, for a period of time sufficient to reduce the chlorine content of the compound. Chlorine levels in the compound may be reduced by treatment with iodine and bromine compounds. However, as a result, both halogens are present in the final product. Further, as would be apparent to one of ordinary skill in the art, the post treatment of dicarboxylic systems with mineral acids can lead to decarboxylation as well as the degradation of the polymer.

U.S. Patent No. 5,672,266 to Sivik et al. discusses a process for reducing chlorine content by post thermal treatment, as in U.S. Patent No. 5,489,390, using a relatively large amount of a Lewis acid, in the absence of elemental carbon. The Lewis acid is selected from salts of zinc, magnesium, calcium, iron, copper, boron, aluminum, tin, titanium and mixtures thereof, preferably in the presence of a source of iodine or bromine.

U.S. Patent No. 5,885,944 to Pudelski et al. describes a method of reducing the chlorine content of polyalkylene-substituted carboxylic acylating agents which contain chlorine remaining from the chlorine induced condensation of polyalkenes and $\alpha$-, $\beta$-unsaturated carboxylic acid moieties by post treatment with elemental sulfur. The method disclosed results in the formation of hydrogen sulfide as a by-product and a sulfur-containing polyalkene-substituted carboxylic acylating agent having a relatively high kinematic viscosity.

U.S. Patent No. 6,077,909 to Pudelski et al. describes a method of providing polyalkylene-substituted carboxylic acylating agents having a reduced chlorine content, which method relies on the use of, as the polyalkene reactant, a polyolefin having a total of tetra- and tri-substituted unsaturated end groups in an amount up to about 90 mole percent, wherein the polyolefin is reacted with halogen on a molar basis up to an amount equal to the moles of tetra- and tri-substituted end groups.

EP 0 684 262 describes a process for reducing the chlorine content of chlorinated polypropylene or polyisobutylene, or a mixture of polypropylene and polypropylene succinic anhydride, or polyisobutylene and polyisobutylene and polyisobutylene succinic anhydride, in which the polymer, or polymer and succinic anhydride mixture, is treated with heat for a specified period of time.

EP 0 665 242 describes a method for reducing the chlorine content of polyalkene substituted carboxylic acylating agents which involve treatment with a halogen other than chlorine (e.g., iodine or bromine).

U.S. Patent No. 6,562,904 to Barini et al. describes a method for reducing the chlorine content of polyalkene substituted carboxylic acylating agents in which a maleated polyalkene having a residual chlorine content is heat-soaked in an additional amount of maleic anhydride, in the absence of further added chlorine.

## SUMMARY OF THE INVENTION

In accordance with a first aspect, the present invention provides a method for providing a polyalkene-substituted carboxylic acid, carboxylic anhydride or carboxylic ester by a halogen-assisted reaction of a polyalkene and at least one olefinic monounsaturated mono- or di-carboxylic acid, anhydride or ester, said method comprising: reacting polyalkene and at least one olefinic monounsaturated mono- or di-carboxylic acid, anhydride or ester in the presence of halogen and at least one metal compound, wherein said metal is selected from the group consisting of Mg, Ca, Ti, Zr, Hf, Cr, Mo, Mn, Fe, Co, Ni, Pd, Pt, Cu, Zn, Al and Sn; and said at least one metal compound is introduced into the reaction prior to a time at which greater than 85 mass % of said polyalkene has reacted with said olefinic monounsaturated mono- or di-carboxylic acid, anhydride or ester, in an amount introducing from 0.01 to 5 ppm by mass of elemental metal, based on the mass of polyalkene.

Suitably, the polyalkene substituted carboxylic acid, anhydride or ester compositions have minimized halogen contents.

Preferably, the sediment and cycle time are concurrently minimized in the method according to the first aspect of the present invention.

In accordance with a second aspect, the present invention provides the use of at least one metal compound, as defined in accordance with the first aspect of the invention, in a halogen-assisted reaction of a polyalkene and at least one olefinic monounsaturated mono- or di-carboxylic acid, anhydride or ester to provide a polyalkene-substituted carboxylic acid, carboxylic anhydride or carboxylic ester having reduced residual halogen levels, wherein the metal of the at least one metal compound is selected from the group consisting of Mg, Ca, Ti, Zr, Hf, Cr, Mo, Mn, Fe, Co, Ni, Pd, Pt, Cu, Zn, Al and Sn and the at least one metal compound is present in an amount to introduce from 0.01 to 5 ppm by mass of elemental metal, based on the mass of polyalkene.

These and other objects, advantages and features of the present invention will be better understood from the following detailed description of the preferred embodiments.

## DETAILED DESCRIPTION OF THE INVENTION

Suitable hydrocarbons or polymers employed in the method of this invention include homopolymers, interpolymers or lower molecular weight hydrocarbons. One family of such polymers comprises ethylene and/or at least one $C_3$ to $C_{28}$ alpha-olefin having the formula $H_2C=CHR^1$ wherein $R^1$ is straight or branched chain alkyl radical comprising 1 to 26 carbon atoms and wherein the polymer contains carbon-to-carbon unsaturation, preferably a high degree of terminal ethenylidene unsaturation. Such polymers may comprise interpolymers of ethylene and at least one alpha-olefin of the above formula, wherein $R^1$ is alkyl of from 1 to 18 carbon atoms, and more preferably is alkyl of from 1 to 8 carbon atoms, and more preferably still of from 1 to 2 carbon atoms. Therefore, useful alpha-olefin monomers and comonomers include, for example, propylene, butene-1, hexene-1, octene-1, 4-methylpentene-1, decene-1, dodecene-1, tridecene-1, tetradecene-1, pentadecene-1, hexadecene-1, heptadecene-1, octadecene-1, nonadecene-1, and mixtures thereof (e.g., mixtures of propylene and butene-1).

Exemplary of such polymers are propylene homopolymers, butene-1 homopolymers, ethylene-propylene copolymers and ethylene -butene-1 copolymers, wherein the polymer contains at least some terminal and/or internal unsaturation. Preferred polymers are unsaturated copolymers of ethylene and propylene and ethylene and butene-1. The interpolymers of this invention may contain a minor amount, e.g. 0.5 to 5 mole % of a $C_4$ to $C_{18}$ non-conjugated diolefin comonomer. However, it is preferred that the polymers of this invention comprise only alpha-olefin homopolymers, interpolymers of alpha-olefin comonomers and interpolymers of ethylene and alpha-olefin comonomers. The molar ethylene content of the polymers employed in this invention is preferably in the range of 20 to 80 %, and more preferably 30 to 70 %. When propylene and/or butene-1 are employed as comonomer(s) with ethylene, the ethylene content of such copolymers is most preferably between 45 and 65 %, although higher or lower ethylene contents may be present.

These polymers may be prepared by polymerizing alpha-olefin monomer, or mixtures of alpha-olefin monomers, or mixtures comprising ethylene and at least one $C_3$ to $C_{28}$ alpha-olefin monomer, in the presence of a catalyst system comprising at least one metallocene (e.g., a cyclopentadienyl-transition metal compound) and an aluminoxane compound. Using this process, a polymer in which 95 % or more of the polymer chains possess terminal ethenylidene-type unsaturation can be provided. The percentage of polymer chains exhibiting terminal ethenylidene unsaturation may be determined by FTIR spectroscopic analysis, titration, or $C^{13}$ NMR. Interpolymers of this latter type may be characterized by the formula POLY-C($R^1$)=$CH_2$ wherein $R^1$ is $C_1$ to $C_{26}$ alkyl, preferably $C_1$ to $C_{18}$ alkyl, more preferably $C_1$ to $C_8$ alkyl, and most preferably $C_1$ to $C_2$ alkyl, (e.g., methyl or ethyl) and wherein POLY represents the polymer chain. The chain length of the $R^1$ alkyl group will vary depending on the comonomer(s) selected for use in the polymerization. A minor amount of the polymer chains can contain terminal ethenyl, i.e., vinyl, unsaturation, i.e. POLY-CH=$CH_2$, and a portion of the polymers can contain internal monounsaturation, e.g. POLY-CH=CH($R^1$), wherein $R^1$ is as defined above. These terminally unsaturated interpolymers may be prepared by known metallocene chemistry and may also be prepared as described in U.S. Patent Nos. 5,498,809; 5,663,130; 5,705,577; 5,814,715; 6,022,929 and 6,030,930.

Another useful class of polymers is polymers prepared by cationic polymerization of isobutene, styrene, and the like. Common polymers from this class include polyisobutenes obtained by polymerization of $C_4$ refinery stream having a butene content of 35 to 75% by wt., and an isobutene content of 30 to 60% by wt., in the presence of a Lewis acid catalyst such as aluminum trichloride or boron trifluoride. A preferred source of monomer for making poly-n-butenes is petroleum feed streams such as Raffinate II. These feed stocks are disclosed in the art such as in U.S. Patent No. 4,952,739. Polyisobutylene is a most preferred backbone of the present invention because it is readily available by cationic polymerization from butene streams (e.g., using $AlCl_3$ catalysts). Such polyisobutylenes generally contain residual unsaturation in amounts of about one ethylenic double bond per polymer chain, positioned along the chain.

Polyisobutylene polymers, when employed, are generally based on hydrocarbon chains having a number average molecular weight ($M_n$) of from 900 to 2,300. Methods for making polyisobutylene are well known.

Preferred olefinic monounsaturated reactants used to functionalize the polyalkene backbone comprise mono- and dicarboxylic acid material, i.e., acid, anhydride, or acid ester material, including (i) monounsaturated $C_4$ to $C_{10}$ dicarboxylic acid wherein (a) the carboxyl groups are vicinyl, (i.e., located on adjacent carbon atoms) and (b) at least one, preferably both, of said adjacent carbon atoms are part of said mono unsaturation; (ii) derivatives of (i) such as anhydrides or $C_1$ to $C_5$ alcohol derived mono- or diesters of (i); (iii) monounsaturated $C_3$ to $C_{10}$ monocarboxylic acid wherein the carbon-carbon double bond is conjugated with the carboxyl group, i.e., of the structure -C=C-CO-; and (iv) derivatives of (iii) such as $C_1$ to $C_5$ alcohol derived mono- or diesters of (iii). Mixtures of monounsaturated carboxylic materials (i) - (iv) also may be used. Upon reaction with the backbone, the monounsaturation of the monounsaturated carboxylic reactant becomes saturated. Thus, for example, maleic anhydride becomes backbone-substituted succinic anhydride, and acrylic acid becomes backbone-substituted propionic acid. Exemplary of such olefinic, monounsaturated carboxylic reactants are fumaric acid, itaconic acid, maleic acid, maleic anhydride, chloromaleic acid, chloromaleic anhydride, acrylic acid, methacrylic acid, crotonic acid, cinnamic acid, and lower alkyl (e.g., $C_1$ to $C_4$ alkyl) acid esters of the foregoing, e.g., methyl maleate, ethyl fumarate, and methyl fumarate. The olefinic monounsaturated carboxylic reactant, preferably maleic anhydride, typically will be used in an amount ranging from 0.01 to 20 wt. %, preferably 0.5 to 10 wt. %, based on the weight of polyalkene reactant.

The polyalkene may be functionalized with carboxylic acid producing moieties (preferably acid or anhydride) by reacting the polyalkene under conditions that result in the addition of functional moieties or agents (e.g., the acid, anhydride or ester moieties) onto the polyalkene chains, primarily at sites of carbon-to-carbon unsaturation (also referred to as ethylenic or olefinic unsaturation) using a halogen assisted functionalization process, in the presence of a polyalkene-soluble iron salt.

Processes for reacting polymeric hydrocarbons with olefinic mono- or dicarboxylic acid or anhydride or ester and the preparation of derivatives from such compounds are disclosed in U.S. Patent Nos. 3,087,936; 3,172,892; 3,215,707; 3,231,587; 3,272,746; 3,275,554; 3,381,022; 3,442,808; 3,565,804; 3,912,764; 4,110,349; 4,234,435; and GB-A-1,440,219. U.S. Patent No. 4,234,435 describes a process for performing such a reaction whereby the resulting polyalkene-substituted carboxylic acylating agent will have, on average, at least 1.3 carboxylic groups per molecule. Because the carboxylic group "functionalizes" the molecule (provides a site for further reaction with, for example, an amine or hydroxyl group), such products can be described as having a "functionality" of at least 1.3. The degree of functionality can also be expressed as a saponification number. The saponification number indicates the milligrams of KOH needed to completely saponify one gram of polyalkene-substituted carboxylic acylating agent. Saponification can be defined as the reaction of an acid or anhydride with an alkali base to form a metal carboxylate of the acid, anhydride or ester. Functionality (F) may be expressed according to the following formula:

$$F = (SAP \times \overline{M_n})/((112{,}200 \times A.I.) - (SAP \times MW))$$

wherein SAP is the saponification number (i.e., the number of milligrams of KOH consumed in the complete neutralization of the acid groups in one gram of the acyl group-containing reaction product, as determined according to ASTM D94); $\overline{M_n}$ is the number average molecular weight of the starting polyalkene; A.I. is the fraction of acyl group-containing composition in the reaction product (the remainder being unreacted polyalkene and saturates, unreacted acylating agent and diluent); and MW is the molecular weight of the acyl group (e.g., 98 for maleic anhydride). A reaction product of polyisobutene ($\overline{M_n}$ of 2225, A.I. of 0.86) and maleic anhydride in the presence of chlorine (PIBSA) having a functionality of 1.34 will have a saponification number of about 55. In contrast, such a reaction product having a functionality of 1.16 will have a saponification number of about 48, and such a reaction product having a functionality of 1.6 will have a saponification number of about 65.

Conventional polyisobutylene has about 4 to 5 mol. % vinylidene, 0-2 mol. % vinyl, 63-67 mol. % tri-substituted and about 20 to 30 mol. % tetra-substituted end groups. The vinylidene and vinyl double bonds do not readily add chlorine under the contemplated reaction conditions. The vinylidene and vinyl double bonds do not readily react with the chlorine under such reaction conditions. About 80 to 90 mol. % of the tri- and tetra-substituted unsaturated end groups react with chlorine during the acidification process to produce mostly short-lived intermediate chlorinated polyisobutene. As a result of random chlorination, residual chlorine can be found on the polymer at locations in which the maleic anhydride addition fails to eliminate the chlorine. As the reaction proceeds simultaneously with maleation, maleic anhydride mono-succinated polymer is first obtained, followed by bis-succination/chlorination on newly formed double bonds resulting from HCl elimination. Some polymer having remaining labile allylic chlorine from the tri-/tetra-substituted double bonds, some polymer with chlorine in the backbone, and some polymer containing unreacted double bonds is included in the resulting polyisobutene succinic anhydride (PIBSA) product.

Functionalization can be accomplished by halogenating, e.g., chlorinating or brominating the unsaturated polyalkene to 1 to 8 wt. %, preferably 3 to 7 wt. % chlorine, or bromine, based on the weight of polyalkene, by passing the chlorine or bromine through the polyalkene at a temperature of 60 to 250°C, preferably 110 to 180°C, e.g., 120 to 140°C, for 0.5 to 10, preferably 1 to 7 hours. The halogenated polyalkene (backbone) thus formed can be reacted, in the presence of the metal, with sufficient monounsaturated reactant capable of adding functional moieties to the backbone, e.g., monounsaturated carboxylic reactant, at a temperature of from 100 to 250°C, such as from 180°C to 250°C, preferably from 180°C to 235°C, and for a time of 0.5 to 10 hours (e.g., 3 to 8 hours), or until the product obtained contains the desired number of moles of the monounsaturated carboxylic reactant per mole of halogenated backbone.

Alternatively, and preferably, polyalkene and the olefinic, monounsaturated carboxylic reactant can be mixed and heated in the presence of the metal compound, while introducing halogen into the hot material. At least one metal salt is introduced into the reaction mixture prior to completion of the halogen-assisted functionalization reaction, such as prior to a time at which greater than 85 mass %, such as greater than 80 mass %, preferably greater than 70 mass %, such as greater than 50 mass %, more preferably 25 mass %, of the polyalkene has been functionalized. More preferably, the metal salt is introduced prior to the initiation of the functionalization reaction. Most preferably, the metal compound is introduced into the reaction mixture concurrent with the polyalkene (e.g., is pre-mixed with the polyalkene).

Metal compounds useful in the practice of the present invention include compounds of magnesium (Mg), calcium (Ca), titanium (Ti), zirconium (Zr), halfnium (Hf), chromium (Cr), molybdenum (Mo), manganese (Mn), iron (Fe), cobalt (Co), nickel (Ni), palladium (Pd), platinum (Pt), copper (Cu), zinc (Zn), aluminum (Al) and Tin (Sn). From a standpoint of performance, cost and toxicity (in handling), metal compounds of Fe, Cu, Co, Ni, Ti, Zn, Sn and Al are preferred. Most preferable are metal compounds of Fe, Ni, Cu and Co, particularly Fe.

Metal compounds useful in the practice of the present invention include metal chlorides, metal oxides, metal alkoxides and metal alkyl carboxylates. Preferable metal compounds are metal compounds that are soluble in the polyalkene, such as metal alkoxides and metal alkyl carboxylates.

Examples of useful metal compounds include Fe(neodecanoate)$_2$, Fe(III) oxide; Ni(II) 2-ethylhexanoate; Cu(II) 2-ethylhexanoate; cyclopentadienyl Co(I) dicarbonyl; bis(cyclopentadienyl)dimethyl Zr(IV); Cu(I) acetate; Fe Chloride (FeCl$_3$); Cr(II)-2-ethylhexanoate; Mn(II)-2-ethylhexanoate; Al chloride (AlCl$_3$); Al oxide, Zn acetate, Zn Stearate, Ti(IV) 2 -ethyloxide and Sn acetate. Preferred are polyalkene-soluble compounds of Fe, Cu, and Co, most preferably, the metal compounds are polyalkene-soluble Fe compounds, such as Fe naphthenate, Fe(III) neo-decanoate, Fe(III) 2 ethyl hexanoate, Fe(III) acetyl acetonate, Fe(II) stearate, particularly Fe(III) neo-decanoate.

The metal compounds are added in amounts introducing from 0.01 to 5.0 ppm, such as from 0.1 to 3.0 ppm, preferably from 0.1 to 2.0 ppm, such as from 0.2 to 1.0 ppm of elemental metal into the polyalkene. Introduction of the noted small amount of metal compound into the reaction concurrent with the polyalkene, or prior to substantial functionalization of the polyalkene, in a halogen-assisted reaction of polyalkene and olefinic, monounsaturated mono- or dicarboxylic acid, anhydride or ester results in the efficient, controlled release of halogen (chlorine) from the polyalkene backbone to provide polyalkene substituted carboxylic acid, anhydride or ester acylating agents having minimized residual halogen levels. In the presence of the metal, the halogen level is reduced without the need for long periods of nitrogen stripping, which, in a conventional process, is conducted for numerous hours at high temperature or other post-treatment of the halogen-containing polyalkene. Therefore, the cycle time of the reaction is reduced, as is the level of sediment in the product, which is a by-product of lengthy high temperature nitrogen stripping processes and certain post-treatment procedures for reducing residual chlorine, such as heat-soaking. The process of the present invention further requires a far smaller amount of metal compound to effect a reduction in halogen content compared to post-treatment methods using Lewis acids (e.g., 10 ppm to 2.5 mass%, as described in U.S. Patent No. 5,489,390). Such large amounts of metal can contribute to depolymerization of the polyalkene backbone.

The preferred polyalkene reactant is polyisobutylene, more preferably polyisobutylene (PIB) having a number average molecular weight ($\overline{M}_n$) of 900 to 3000, such as 1500 to 3000. Further preferred as the polyalkene reactant is polyisobutylene having $\overline{M}_n$ of 900 to 3000 (preferably 1500 to 3000) and greater than 60%, more preferably greater than 80%, tri- and tetra-substituted unsaturated end groups. Preferably, the polyalkene is derived from a $C_4$ petroleum feed stream containing from 10 to 75 mass%, preferably from 15 to 60 mass %, more preferably from 20 to 55 mass % of isobutene, based on the total mass of olefin. The preferred olefinic monounsaturated mono- or dicarboxylic acid, anhydride or ester is maleic anhydride (MA). Preferably, the MA and PIB are charged for reaction at a MA/PIB molar ratio of from 0.9 to 2.5, preferably from 1.0 to 2.0, more preferably from 1.1 to 1.8.

Preferably, the MA and PIB are reacted together (soak/strip) for from 1 to 15 hours, at a temperature of from 100°C to 250°C, preferably from 180°C to 250°C. Preferably, the halogen is chlorine and the chlorine is introduced in an amount providing a $Cl_2$/PIB molar ratio of from 1.2 to 3.5, preferably from 1.4 to 3.0, more preferably from 1.6 to 2.5. The method of the present invention allows for the use of higher Cl2/PIB ratios than conventional methods; in conventional methods the use of such high ratios is not possible due to the higher residual chlorine content of the resulting products. The reduction in the amount of sediment in products formed by the present method is especially apparent when the $Cl_2$/PIB ratio is increased.

Preferably from 8 to 35 mass % of the total mass of chlorine is introduced into the reaction mixture per hour. Preferably, the temperature is raised during the reaction and introduction of chlorine begins at a temperature of from 100°C to 170°C, more preferably from 120°C to 150°C, and ends at a temperature of from 180 to 250°C, more preferably from 180°C to 230°C (e.g., 220°C). Preferably, at least 70 mass %, such as at least 75 mass %, of the chlorine is added before the reaction temperature reaches 180°C. Preferably, the reaction product is polyisobutene succinic anhydride (PIBSA) having a functionality of from 1.2 to 1.7, preferably from 1.3 to 1.6.

Preferably, the polyalkene and olefinic monounsaturated mono- or di-carboxylic acid, anhydride or ester is reacted in the substantial absence of polyalkene-insoluble elemental metal and metal compounds (amounts introducing less than 5 ppm of elemental metal into the polyalkene).

Although the process of the present invention, in addition to minimizing halogen content, also minimizes sediment formation to a level at which filtration of the product and/or addition of sediment-reducing agents becomes unnecessary, the product may be treated with a sediment reducing agent to provide a product that is substantially free of sediment (less than 0.08 mass %, preferably below 0.03 mass %, such as from 0.01 to 0.03 mass % sediment).

Sediment reducing agents suitable for use include oil soluble strong organic acids, preferably oil soluble hydrocarbyl substituted sulfonic acids. An "oil soluble" hydrocarbyl-substituted sulfonic acid is one that is at least 50 mass % soluble in mineral oil at 20°C. The hydrocarbyl sulfonic acid may be a natural or synthetic sulfonic acid, such as a mahogany or petroleum alkyl sulfonic acid, an alkyl sulfonic acid or an alkaryl sulfonic acid, wherein the hydrocarbyl substituent (i.e., petroleum alkyl, linear and/or branched chain alkyl and alkaryl) imparts the oil solubility. Oil-soluble mahogany acids may be obtained by treating lubricating oil basestocks with concentrated or fuming sulfuric acid.

The hydrocarbyl substituent of the sulfonic acid can contain non-hydrocarbon groups such as nitro, amino, halo (e.g., chloro or bromo), lower alkoxyl, lower alkyl mercapto, oxo (=O), thio (=S), imino (-NH-), ether (-O-), and thioether (-S-), provided the essentially hydrocarbon character of the substituent is retained for the purposes of this invention. When such non-hydrocarbon groups are present, they will generally represent no more than 10 mass % of the total weight of the atoms in the hydrocarbyl substituent.

The preferred hydrocarbyl substituent is alkaryl, and the preferred sulfonic acids are accordingly alkaryl sulfonic acids. Alkaryl sulfonic acids can be obtained by sulfonating alkyl substituted aromatic hydrocarbons such as those obtained from the fractionation of petroleum by distillation and/or extraction, or by the alkylation of aromatic hydrocarbons as, for example, those obtained by alkylating benzene, toluene, xylene, naphthalene, and biphenyl. Preferred alkaryl sulfonic acids include those obtained by the sulfonation of hydrocarbons prepared by the alkylation of benzene or toluene with tri-, tetra- or pentapropene fractions resulting from propene polymerization.

The alkaryl sulfonic acids typically contain from 15 to 76, preferably from 24 to 40, and more preferably from 28 to 36 total carbon atoms. The aryl moiety can be derived from any aromatic hydrocarbon such as benzene, naphthalene, anthracene and biphenyl, but is preferably derived from benzene or naphthalene, and is most preferably derived from benzene. The preferred alkyl benzenesulfonic acids typically contain from 9 to 70, preferably from 18 to 34, more preferably from 22 to 30 total carbon atoms in the alkyl substituent (or substituents) in the aryl moiety. Particularly preferred is an alkylated benzenesulfonic acid having a $\overline{M}_n$ of from 475 to 600 and an average of 2 alkyl groups wherein each of the alkyl groups contains an average of 11 to 15 carbon atoms.

The alkylated benzene used for preparing the sulfonic acid is obtained by known alkylation processes; e.g., the benzene can be reacted with a suitable alkene or oligomer or polymer thereof in the presence of boron trifluoride. Among the $C_9$ to $C_{70}$ alkylated benzenes which are preferably employed in the preparation of the sulfonic acid are nonylbenzene, dodecylbenzene, waxy alkylated benzenes, and benzenes alkylated with suitable branched chain polymers of up to 70 carbon atoms obtained from propene, butene, amylene or mixtures thereof. Preferably, nonyl or dodecyl or either of their equivalents in a mixture of alkyls is employed in the preparation of the sulfonic acid.

The hydrocarbyl-substituted sulfonic acid is used in an amount effective for preventing or substantially reducing the formation of sediments for the selected reaction time and conditions. When used, the amount of sulfonic acid employed in the present invention is typically in the range of from 0.05 to 1.0 mass %, preferably 0.15 to 0.5 mass % based on the total weight of the polyalkene and the dicarboxylic reactants.

To provide a dispersant suitable for use in fuels and lubricants, the polyalkene-substituted carboxylic acylating agent, as described *supra,* may then be further derivatized with a nucleophilic reactant, such as an amine, amino-alcohol, alcohol, metal compound, or mixture thereof, to form a corresponding derivative. Useful amine compounds for derivatizing functionalized polymers comprise at least one amine and can comprise one or more additional amine or other reactive or polar groups. These amines may be hydrocarbyl amines or may be predominantly hydrocarbyl amines in which the hydrocarbyl group includes other groups, e.g., hydroxyl groups, alkoxyl groups, amide groups, nitriles and imidazoline groups. useful amine compounds include mono- and polyamines, e.g., polyalkene and polyoxyalkylene polyamines of 2 to 60, such as 2 to 40 (e.g., 3 to 20) total carbon atoms having 1 to 12, such as 3 to 12, and preferably 3 to 9 nitrogen atoms per molecule. Mixtures of amine compounds may advantageously be used, such as those prepared by reaction of alkylene dihalide with ammonia. Preferred amines are aliphatic saturated amines, including, for example, 1,2-diaminoethane; 1,3-diaminopropane; 1,4-diaminobutane; 1,6-diaminohexane; polyethylene amines such as diethylene triamine; triethylene tetramine; tetraethylene pentamine and polypropyleneamines such as 1,2-propylene diamine; and di-(1,2-propylene)triamine.

Other useful amine compounds include: alicyclic diamines such as 1,4-di(aminomethyl) cyclohexane and heterocyclic nitrogen compounds such as imidazolines and alkylamine-substituted triazines, such as 2, 4, 6-trihexamethylenediamine triazine (TAHM) as described in U.S. Patent No. 6,284,717. Another useful class of amines is the polyamido and related amido-amines as disclosed in U.S. Patent Nos. 4,857,217; 4,956,107; 4,963,275; and 5,229,022. Also usable is tris(hydroxymethyl)amino methane (THAM) as described in U.S. Patent Nos. 4,102,798; 4,113,639 and 4,116,876. Dendrimers, star-like amines, and comb-structured amines may also be used. Similarly, one may use condensed amines, as described in U.S. Patent No. 5,053,152 or "heavy polyamines", as described, for example, in any one of U.S. Patent Nos. 5,565,128; 5,756,431; 5,792,730; or 5,854,186. The polyolefin-substituted carboxylic acylating agent can be reacted with the amine compound using conventional techniques as described, for example, in U.S. Patent Nos. 4,234,435 and 5,229,022, as well as in EP-A-208,560.

The polyalkene-substituted carboxylic acylating agent may also be derivatized with hydroxyl compounds such as monohydric and polyhydric alcohols, or with aromatic compounds such as phenols and naphthols. Preferred polyhydric alcohols include alkylene glycols in which the alkylene radical contains from 2 to 8 carbon atoms. Other useful polyhydric alcohols include glycerol, mono-oleate of glycerol, monostearate of glycerol, monomethyl ether of glycerol, pentaerythritol, dipentaerythritol, and mixtures thereof. An ester dispersant may also be derived from an unsaturated alcohol, such as allyl alcohol, cinnamyl alcohol, propargyl alcohol, 1-cyclohexane-3-ol, and oleyl alcohol. Still other classes of alcohols capable of yielding ashless dispersants comprise ether-alcohols, including oxy-alkylene and oxyarylene. Such ether-alcohols are exemplified by ether-alcohols having up to 150 oxy-alkylene radicals wherein the alkylene radical contains from 1 to 8 carbon atoms. The ester dispersants may be di-esters of succinic acids or acid-esters, i.e., partially esterified succinic acids, as well as partially esterified polyhydric alcohols or phenols, i.e., esters having free alcohol or phenolic hydroxyl radicals. An ester dispersant may be prepared by any one of several known methods as described, for example, in U.S. Patent No. 3,381,022.

Particularly preferred ashless dispersants are those derived from polyisobutylene substituted with succinic anhydride groups and reacted with polyethylene amines, e.g., polyethylene diamine, tetraethylene pentamine; or a polyoxyalkylene polyamine, e.g., polyoxypropylene diamine, trimethylolaminomethane; a hydroxyl compound, e.g., pentaerythritol; and combinations thereof. One particularly preferred dispersant combination is a combination of (A) polyisobutylene substituted with succinic anhydride groups and reacted with (B) a hydroxy compound, e.g., pentaerythritol; (C) a polyoxyalkylene polyamine, e.g., polyoxypropylene diamine, or (D) a polyalkylene diamine, e.g., polyethylene diamine and tetraethylene pentamine using 0.3 to 2 moles of (B), (C) and/or (D) per mole of (A). Another preferred dispersant combination comprises a combination of (A) polyisobutenyl succinic anhydride with (B) a polyalkylene polyamine, e.g., tetraethylene pentamine, and (C) a polyhydric alcohol or polyhydroxy-substituted aliphatic primary amine, e.g., pentaerythritol or trismethylolaminomethane, as described in U.S. Patent No. 3,632,511.

Such ashless dispersants can be further post treated by a variety of conventional post treatments such as boration, as generally taught in U.S. Patent Nos. 3,087,936 and 3,254,025. Boration of the dispersant is readily accomplished by treating an acyl nitrogen-containing dispersant with a boron compound such as boron oxide, boron halide, boron acids, and esters of boron acids, in an amount sufficient to provide from 0.1 to 20 atomic proportions of boron for each mole of acylated nitrogen composition. Useful dispersants contain from 0.05 to 2.0 mass %, e.g., from 0.05 to 0.7 mass % boron. The boron, which appears in the product as dehydrated boric acid polymers (primarily $(HBO_2)_3$), is believed to attach to the dispersant bis-imides and diimides as amine salts, e.g., the metaborate salt of the diimide. Boration can be carried out by adding from 0.5 to 4 mass %, e.g., from 1 to 3 mass % (based on the weight of acyl nitrogen compound) of a boron compound, preferably boric acid, usually as a slurry, to the acyl nitrogen compound and heating with stirring at from 135°C to 190°C, e.g., 140°C to 170°C, for from 1 to 5 hours, followed by nitrogen stripping. Alternatively, the boron treatment can be conducted by adding boric acid to a hot reaction mixture of the dicarboxylic acid material and amine, while removing water. Other post reaction processes known in the art can also be applied.

## EXAMPLES

### Example 1

To demonstrate the effects of the inventive method, a series of polyisobutylene succinic anhydride (PIBSA) products having various functionalities/SAP Nos. were formed by reacting 2225 $\overline{M}_n$ polyisobutylene (PIB) and maleic anhydride (MA) in a simultaneous chlorination/maleation reaction under the following conditions in both the presence and absence of the specified amount of a polyisobutylene-soluble iron salt (Iron (III) Neo-Decanoate in Isopar-L solvent; the concentration of Fe in the solution being 6 mass %). The SAP No., chlorine content and sediment content of the resulting PIBSA products were then measured and compared. The results are shown below, in Table 1:

Table 1

| Sample # | 1 | 2 | 3 | 4 | 5 | 6 | 7 | 8 | 9 | 10 |
|---|---|---|---|---|---|---|---|---|---|---|
| Inventive/ Comparative | Comp | Inv | Comp | Inv | Comp | Inv | Comp | Inv | Comp | Inv |
| Fe Species Added | No | Yes | No | Yes | No | Yes | No | Yes | No | Yes |
| Fe Conc. (mppm in PIB) | --- | 0.50 | --- | 0.50 | --- | 0.50 | --- | 0.35 | --- | 0.50 |
| MA/PIB Charge Ratio (m/m) | 0.055 | 0.055 | 0.055 | 0.055 | 0.055 | 0.055 | 0.057 | 0.057 | 0.063 | 0.063 |
| $Cl_2$/PIB Charge Ratio (m/m) | 0.055 | 0.055 | 0.058 | 0.058 | 0.054 | 0.054 | 0.054 | 0.057 | 0.065 | 0.065 |
| $Cl_2$ Addition Time (hrs) | 5 | 5 | 4 | 5 | 5.5 | 5.5 | 6.0 | 6.0 | 5 | 5 |
| $Cl_2$ Addition Temp. (°C) | 140-205 | 140-205 | 140-225 | 140-225 | 140-215 | 140-220 | 140-195 | 140-200 | 140-220 | 140-220 |
| Soak Conditions (hrs@°C) | 2@225 | 2@225 | 2@225 | 2@225 | 2@220 | 2@220 | 2@220 | 2@220 | 2@225 | 2@225 |
| $N_2$ Strip Conditions (hrs@°C) | 2@225 | 2@225 | ½@225 | ½@225 | 1@220 | 1@220 | 8¾@220 | 1@220 | 1@225 | 1 @225 |
| Batch Cycle Time (hrs) | 11.5 | 10.5 | 8.5 | 9.5 | 12.3 | 11.5 | 20.0 | 12.0 | 10.5 | 10.5 |
| PIBSA Quality | | | | | | | | | | |
| SAP No. (mg KOH/mg) | 55.2 | 52.7 | 56.1 | 53.9 | 52.0 | 54.4 | 55.2 | 54.3 | 64.0 | 63.0 |
| Cl Content (mass %) | 0.177 | 0.106 | 0.251 | 0.116 | 0.270 | 0.140 | 0.238 | 0.21 | 0.238 | 0.134 |
| Sediment Content (vol %) | 0.01 | 0.01 | 0.01 | 0.01 | 0.01 | 0.01 | 0.03 | 0.02 | 0.01 | 0.01 |

As shown by a comparison between comparative Samples 1, 3, 5 and 9, and inventive Samples 2, 4, 6 and 10, respectively, at constant nitrogen stripping times/temperatures, the presence of the defined small amount of metal compound during the chlorine assisted maleation process led to a product having reduced residual chlorine contents. As shown by a comparison between comparative Samples 5 and 7, when further nitrogen stripping is used to reduce the chlorine content of the product formed in the absence of the metal, the cycle time is increased, and far more sediment is formed, and the reduction in chlorine content is marginal. As shown by a comparison between comparative Sample 7 and inventive Sample 8, the presence of the metal compound allows for an 8 hour reduction in batch cycle time, while achieving a comparable chlorine content and a reduced level of sediment.

Example 2

To demonstrate the adverse impact of higher levels of metal on the formation of PIBSA products, PIBSA products having the functionalities/SAP Nos. shown were formed by reacting 2225 $\overline{M}_n$ polyisobutylene (PIB) and maleic anhydride (MA) in a simultaneous chlorination/maleation reaction under the following conditions in (i) the absence of a polyisobutylene-soluble iron salt (Iron (III) Neo-Decanoate) and (ii) in the presence of an amount of the polyisobutylene-soluble iron salt providing greater than 2 ppm of iron (ppm of mass in PIB). The SAP No., level of active ingredient (AI), chlorine content and sediment content of the resulting PIBSA products were then measured and compared. The results are shown below, in Table 2:

Table 2

| Sample # | 11 | 12 |
|---|---|---|
| Inventive/Comparative | Comp | Inv |
| Fe Species Added | No | Yes |
| Fe Conc. (mppm in PIB) | --- | 3.0 |
| MA/PIB Charge Ratio (m/m) | 0.065 | 0.065 |
| $Cl_2$/PI Charge Ratio (m/m) | 0.055 | 0.055 |
| $Cl_2$ Addition Time (hrs) | 5 | 5 |
| $Cl_2$ Addition Temp. (°C) | 140-225 | 140-225 |
| Soak Conditions (hrs@°C) | 2@225 | 2@225 |
| $N_2$ Strip Conditions (hrs@°C) | 1@225 | 1@225 |
| Batch Cycle Time (hrs) | 10 | 10 |
| PIBSA Quality | | |
| SAP No. (mg KOH/mg) | 56.9 | 54.9 |
| Cl Content (mass %) | 0.088 | 0.064 |
| Sediment Content (vol %) | 0.01 | 0.03 |

As shown by the comparisons of Table 2, the presence of greater amounts of the polyalkene-soluble iron compound during the chlorine assisted maleation process led to an increase in sediment, which is indicative of backbone depolymerization.

Example 3

To demonstrate the effects of the inventive method using other polyisobutylene-soluble metal salts, polyisobutylene succinic anhydride (PIBSA) products were formed by reacting 2225 $\overline{M}_n$ polyisobutylene (PIB) and maleic anhydride (MA) using the charge ratios (of reactants) shown, in a simultaneous chlorination/maleation reaction under the following conditions in both the presence and absence of the specified amount of polyisobutylene-soluble nickel and copper salts (Ni(II)-2-ethylhexanoate and Cu(II)-2-ethylhexanoate). The SAP No., chlorine content and sediment content of the resulting PIBSA products were then measured and compared. The results are shown below, in Table 3:

Table 3

| Sample # | 13 | 14 | 15 | 16 | 17 |
|---|---|---|---|---|---|
| Inventive/Comparative | Comp | Inv | Inv | Inv | Inv |
| Metal Species Added | No | Yes | Yes | Yes | Yes |
| Metal Species | --- | Ni | Ni | Cu | Cu |
| Metal Conc. (mppm in PIB) | --- | 0.50 | 2.00 | 0.50 | 2.00 |
| MA/PIB Charge Ratio (m/m) | 0.065 | 0.065 | 0.065 | 0.065 | 0.065 |
| $Cl_2$/PIB Charge Ratio (m/m) | 0.058 | 0.058 | 0.058 | 0.058 | 0.058 |
| $Cl_2$ Addition Time (hrs) | 5 | 5 | 5 | 5 | 5 |
| $Cl_2$ Addition Temp. (°C) | 140-220 | 140-220 | 140-220 | 140-220 | 140-220 |
| Soak Conditions (hrs@°C) | 2@220 | 2@220 | 2@220 | 2@220 | 2@220 |
| $N_2$ Strip Conditions (hrs@°C) | 1@220 | 1@220 | 1@220 | 1@220 | 1@220 |
| Batch Cycle Time (hrs) | 9.5 | 9.5 | 9.5 | 9.5 | 9.5 |
| PIBSA Quality | | | | | |
| SAP No. (mg KOH/mg) | 58.0 | 57.6 | 58.9 | 56.5 | 55.9 |
| Cl Content (mass %) | 0.117 | 0.105 | 0.106 | 0.104 | 0.102 |
| Sediment Content (vol %) | 0.01 | 0.01 | 0.01 | 0.01 | 0.01 |

As shown by a comparison between comparative Sample 13, and inventive Samples 14 through 17, at constant nitrogen stripping times/temperatures, the presence of the defined small amount of nickel or copper compound during the chlorine assisted maleation process led to a product having reduced residual chlorine contents, with no increase in sediment.

**Claims**

1. A method for providing a polyalkene-substituted carboxylic acid, carboxylic anhydride or carboxylic ester by a halogen-assisted reaction of a polyalkene and at least one olefinic monounsaturated mono- or di-carboxylic acid, anhydride or ester, said method comprising:

   reacting polyalkene and at least one olefinic monounsaturated mono- or di-carboxylic acid, anhydride or ester in the presence of halogen and at least one metal compound, wherein said metal is selected from the group consisting of Mg, Ca, Ti, Zr, Hf, Cr, Mo, Mn, Fe, Co, Ni, Pd, Pt, Cu, Zn, Al and Sn; and said at least one metal compound is introduced into the reaction prior to a time at which greater than 85 mass % of said polyalkene has reacted with said olefinic monounsaturated mono- or di-carboxylic acid, anhydride or ester, in an amount introducing from 0.01 to 5 ppm by mass of elemental metal, based on the mass of polyalkene.

2. The method of claim 1, wherein said metal compound is introduced into the reaction pre-mixed with, or concurrent to the introduction of, said polyalkene.

3. The method of claim 2, wherein said metal compound is introduced into the reaction pre-mixed with said polyalkene.

4. The method as claimed in any one of claims 1 to 3, wherein said at least one metal compound is introduced into the reaction in an amount introducing from 0.1 to 2 ppm by mass of elemental metal, based on the mass of polyalkene.

5. The method as claimed in any one of the preceding claims, wherein said metal of said at least one metal compound is selected from the group consisting of Ti, Fe, Sn, Co, Ni, Cu, Zn and Al.

6. The method of claim 5, wherein said metal of said at least one metal compound is selected from the group consisting of Fe, Co, Ni and Cu.

7. The method of claim 6, wherein said metal of said at least one metal compound is Fe.

8. The method as claimed in any one of the preceding claims, wherein said metal compound is a polyalkene-soluble metal compound.

9. The method of claim 8, wherein said at least one polyalkene-soluble metal compound is selected from the group consisting of Fe naphthenate Fe(III) neo-decanoate, Fe(III) 2 ethyl hexanoate, Fe(III) acetyl acetonate and Fe(II) stearate.

10. The method as claimed in any one of the preceding claims, wherein said polyalkene is polyisobutylene, said olefinic, monounsaturated mono- or di-carboxylic acid, anhydride or ester is selected from the group consisting of fumaric acid, itaconic acid, maleic acid, maleic anhydride, chloromaleic acid, chloromaleic anhydride, acrylic acid, methacrylic acid, crotonic acid, cinnamic acid, and $C_1$ to $C_4$ alkyl acid esters thereof, and said halogen is chlorine or bromine.

11. The method of claim 10, wherein said polyalkene is polyisobutylene, said olefinic monounsaturated mono- or di-carboxylic acid, anhydride or ester is maleic anhydride and said halogen is chlorine.

12. The method as claimed in claim 10 or 11, wherein said polyisobutylene has a number average molecular weight ($\overline{M}_n$) of from 900 to 3000.

13. The method as claimed in any one of claims 10 to 12, wherein said polyisobutylene has greater than 60% tri-and tetra-substituted unsaturated end groups.

14. The method as claimed in any one of claims 10 to 13, wherein said polyisobutylene is derived from a $C_4$ petroleum feed stream containing from 10 to 75 mass % of isobutene, based on the total mass of olefin.

15. The method as claimed in any one of the preceding claims, wherein (A) said at least one olefinic monounsaturated mono- or di-carboxylic acid, anhydride or ester and (B) said polyalkene are charged for reaction in a molar ratio (A/B) of from 0.9 to 2.5.

16. The method of claim 15, wherein (C) said halogen is introduced into the reaction in a molar ratio (C/B) of from 1.2 to 3.5.

17. The method as claimed in any one of the preceding claims, wherein said at least one olefinic monounsaturated mono- or di-carboxylic acid, anhydride or ester and said polyalkene are reacted together for from 1 to 15 hours, at a temperature of from 100°C to 250°C.

18. The method of claim 17, wherein the temperature is raised during the reaction and introduction of said halogen begins at a temperature of from 100°C to 170°C, and ends at a temperature of from 180°C to 250°C.

19. The method as claimed in any one of the preceding claims, wherein 8 mass % to 35 mass % of the total amount of halogen is introduced into the reaction per hour.

20. The method as claimed in any one of the preceding claims, wherein at least 70 mass % of said halogen is introduced into the reaction before the reaction mixture reached 180°C.

21. The method as claimed in any one of the preceding claims, wherein said metal compound is Fe(III) neodecanoate.

22. The method as claimed in any one of the preceding claims, wherein said polyalkene-substituted carboxylic acid, carboxylic anhydride or carboxylic ester product has a functionality of from 1.2 to 1.7.

23. The method as claimed in any one of the preceding claims, wherein said polyalkene and said at least one olefinic, monounsaturated mono- or di-carboxylic acid, anhydride or ester are reacted in the absence of polyalkene-insoluble elemental metal and metal compounds.

24. The method as claimed in any one of claims 1 to 4, wherein said metal compound is selected from polyalkene soluble Ni and Cu compounds and said polyalkene-soluble Ni and Cu compounds are selected from the group consisting of Ni(II) 2-ethylhexanoate; Cu(II) 2-ethylhexanoate; and Cu(I) acetate.

25. The use of at least one metal compound in a halogen-assisted reaction of a polyalkene, as defined in any one of claims 1 to 24, and at least one olefinic monounsaturated mono- or di-carboxylic acid, anhydride or ester, as defined in any one of claims 1 to 24, to provide a polyalkene-substituted carboxylic acid, carboxylic anhydride or carboxylic ester having reduced residual halogen levels, wherein the metal of the at least one metal compound is selected from the group consisting of Mg, Ca, Ti, Zr, Hf, Cr, Mo, Mn, Fe, Co, Ni, Pd, Pt, Cu, Zn, Al and Sn and the at least one metal compound is present in an amount to introduce from 0.01 to 5 ppm by mass of elemental metal, based on the mass of polyalkene.

**Patentansprüche**

1. Verfahren zur Herstellung von mit Polyalken substituierter Carbonsäure, mit Polyalken substituiertem Carbonsäureanhydrid oder mit Polyalken substituiertem Carbonsäureester durch eine Halogen-unterstützte Reaktion eines Polyalkens und mindestens einer/einem olefinischen, einfach ungesättigten Mono- oder Dicarbonsäure, -anhydrid oder -ester, bei welchem Verfahren:

Polyalken und mindestens einer/einem olefinischen, einfach ungesättigten Mono- oder Dicarbonsäure, -anhydrid oder -ester in Gegenwart von Halogen und mindestens einer Metallverbindung, wobei das Metall aus der Gruppe bestehend aus Mg, Ca, Ti, Zr, Hf, Cr, Mo, Mn, Fe, Co, Ni, Pd, Pt, Cu, Zn, Al und Sn ausgewählt ist, umgesetzt wird und die mindestens eine Metallverbindung vor einem Zeitpunkt in die Reaktion eingebracht wird, bei dem mehr als 85 Masse-% des Polyalkens mit der/dem olefinischen, einfach ungesättigten Mono- oder Dicarbonsäure, -anhydrid oder - ester reagiert hat, und in einer Menge, die 0,01 bis 5 Masse-ppm an elementarem Metall einbringt, bezogen auf die Masse des Polyalkens.

2. Verfahren nach Anspruch 1, bei dem die Metallverbindung vorgemischt mit dem Polyalken oder gleichzeitig mit diesem in die Reaktion eingebracht wird.

3. Verfahren nach Anspruch 2, bei dem die Metallverbindung vorgemischt mit dem Polyalken in die Reaktion eingebracht wird.

4. Verfahren nach einem der Ansprüche 1 bis 3, bei dem die mindestens eine Metallverbindung in einer Menge in die Reaktion eingebracht wird, die 0,1 bis 2 Masse-ppm an elementarem Metall einbringt, bezogen auf die Masse des Polyalkens.

5. Verfahren nach einem der vorhergehenden Ansprüche, bei dem das Metall der mindestens einen Metallverbindung aus der Gruppe bestehend aus Ti, Fe, Sn, Co, Ni, Cu, Zn und Al ausgewählt ist.

6. Verfahren nach Anspruch 5, bei dem das Metall der mindestens einen Metallverbindung aus der Gruppe bestehend aus Fe, Co, Ni und Cu ausgewählt ist.

7. Verfahren nach Anspruch 6, bei dem das Metall der mindestens einen Metallverbindung Fe ist.

8. Verfahren nach einem der vorhergehenden Ansprüche, bei dem die Metallverbindung eine Polyalken-lösliche Metallverbindung ist.

9. Verfahren nach Anspruch 8, bei dem mindestens eine Folyalken-lösliche Metallverbindung aus der Gruppe bestehend aus Fe-Naphthenat, Fe(III)-Neodecanoat, Fe(III)-2-Ethylhexanoat, Fe(III)-Acetylacetonat und Fe(II)-Stearat ausgewählt ist.

10. Verfahren nach einem der vorhergehenden Ansprüche, bei dem das Polyalken Polyisobutylen ist, die/das/der olefinische, einfach ungesättigte Mono- oder Dicarbonsäure, -anhydrid oder -ester aus der Gruppe bestehend aus Fumarsäure, Itaconsäure, Maleinsäure, Maleinsäureanhydrid, Chlormaleinsäure, Chlormaleinsäureanhydrid, Acrylsäure, Methacrylsäure, Crotonsäure, Zimtsäure und deren $C_1$- bis $C_4$-Alkylsäureester ausgewählt ist und das Halogen Chlor oder Brom ist.

11. Verfahren nach Anspruch 10, bei dem das Polyalken Polyisobutylen, die/das/der olefinische, einfach ungesättigte Mono- oder Dicarbonsäure, -anhydrid oder -ester Maleinsäureanhydrid und das Halogen Chlor ist.

**12.** Verfahren nach Anspruch 10 oder 11, bei dem das Polyisobutylen ein Molekulargewicht (Zahlenmittel, $\overline{M}$n) von 900 bis 3000 aufweist.

**13.** Verfahren nach einem der Ansprüche 10 oder 12, bei dem das Polyisobutylen mehr als 60% tri- und tetrasubstituierte ungesättigte Endgruppen aufweist.

**14.** Verfahren nach einem der Ansprüche 10 bis 13, bei dem das Polyisobutylen aus einem $C_4$-Erdöleinsatzmaterialstrom abgeleitet ist, der 10 bis 75 Masse-% Isobuten enthält, bezogen auf die Gesamtmasse des Olefins.

**15.** Verfahren nach einem der vorhergehenden Ansprüche, bei dem (A) die/das/der mindestens eine olefinische, einfach ungesättigte Mono- oder Dicarbonsäure, -anhydrid oder - ester und (B) das Polyalken in einem Molverhältnis (A/B) von 0,9 bis 2,5 in die Reaktion eingebracht werden.

**16.** Verfahren nach Anspruch 15, bei dem (C) das Halogen in einem Molverhältnis (C/B) von 1,2 bis 3,5 in die Reaktion eingebracht wird.

**17.** Verfahren nach einem der vorhergehenden Ansprüche, bei dem die/das/der mindestens eine einfach ungesättigte, olefinische Mono- oder Dicarbonsäure, -anhydrid oder -ester und das Polyalken für 1 bis 15 Stunden bei einer Temperatur von 100°C bis 250°C zusammen umgesetzt werden.

**18.** Verfahren nach Anspruch 17, bei dem die Temperatur während der Reaktion erhöht wird und die Einbringung des Halogens bei einer Temperatur von 100°C bis 170°C beginnt, und bei einer Temperatur von 180 °C bis 250°C endet.

**19.** Verfahren nach einem der vorhergehenden Ansprüche, bei dem pro Stunde 8 bis 35 Masse-% der Gesamtmenge an Halogen in die Reaktion eingebracht werden.

**20.** Verfahren nach einem der vorhergehenden Ansprüche, bei dem mindestens 70 Masse-% des Halogens in die Reaktion eingebracht werden bevor das Reaktionsgemisch 180°C erreicht.

**21.** Verfahren nach einem der vorhergehenden Ansprüche, bei dem die Metallverbindung Fe(III)-Neodecanoat ist.

**22.** Verfahren nach einem der vorhergehenden Ansprüche, bei dem das mit Polyalken substituierte Carbonsäure-, Carbonsäureanhydrid- oder Carbonsäureester-Produkt eine Funktionalität von 1,2 bis 1,7 besitzt.

**23.** Verfahren nach einem der vorhergehenden Ansprüche, bei dem das Polyalken und die/das/der mindestens eine olefinische, einfach ungesättigte Mono- oder Dicarbonsäure, -anhydrid oder -ester in Abwesenheit von Polyalken-unlöslichem elementaren Metall und Metallverbindungen umgesetzt werden.

**24.** Verfahren nach einem der Ansprüche 1 bis 4, bei dem die Metallverbindung aus Polyalken-löslichen Ni- und Cu-Verbindungen ausgewählt ist und die Polyalken-löslichen Ni- und Cu-Verbindungen aus der Gruppe bestehend aus Ni(II)-2-Ethylhexanoat, Cu(II)-2-Ethylhexanoat und Cu(I)-Acetat ausgewählt sind.

**25.** Verwendung von mindestens einer Metallverbindung in einer durch Halogen-unterstützten Reaktion eines Polyalkens, wie in einem der Ansprüche 1 bis 24 definiert, und mindestens einer/eines olefinischen, einfach ungesättigten Mono- oder Dicarbonsäure, -anhydrids oder -esters, wie in einem der Ansprüche 1 bis 24 definiert, um eine mit Polyalken substituierte Carbonsäure, ein mit Polyalken substituiertes Carbonsäureanhydrid oder einen mit Polyalken substituierten Carbonsäureester mit verringertem Resthalogengehalt bereitzustellen, wobei das Metall der mindestens einen Metallverbindung aus der Gruppe bestehend aus Mg, Ca, Ti, Zr, Hf, Cr, Mo, Mn, Fe, Co, Ni, Pd, Pt, Cu, Zn, Al und Sn ausgewählt ist, und die mindestens eine Metallverbindung in einer Menge vorhanden ist, die 0,01 bis 5 Masse-ppm an elementarem Metall einbringt, bezogen auf die Masse des Polyalkens.

**Revendications**

**1.** Procédé pour fournir un acide carboxylique, anhydride carboxylique ou ester carboxylique à substituant polyalcène par une réaction, assistée par halogène, d'un polyalcène et d'au moins un acide, anhydride ou ester mono- ou dicarboxylique à mono-insaturation oléfinique, ledit procédé comprenant :

la réaction d'un polyalcène et d'au moins un acide, anhydride ou ester mono- ou dicarboxylique à mono-insaturation oléfinique en présence d'un halogène et d'au moins un composé métallique, dans lequel ledit métal est choisi dans le groupe consistant en Mg, Ca, Ti, Zr, Hf, Cr, Mo, Mn, Fe, Co, Ni, Pd, Pt, Cu, Zn, Al et Sn ; ledit au moins un composé métallique étant introduit dans la réaction avant un temps auquel plus de 85 % en masse dudit polyalcène ont réagi avec ledit acide, anhydride ou ester mono- ou dicarboxylique à mono-insaturation oléfinique, en une quantité introduisant 0,01 à 5 ppm en masse de métal élémentaire, sur la base de la masse du polyalcène.

2. Procédé suivant la revendication 1, dans lequel ledit composé métallique est introduit dans la réaction à l'état prémélangé avec ledit, ou conjointement avec l'introduction dudit, polyalcène.

3. Procédé suivant la revendication 2, dans lequel ledit composé métallique est introduit dans la réaction à l'état prémélangé avec ledit polyalcène.

4. Procédé suivant l'une quelconque des revendications 1 à 3, dans lequel ledit composé métallique est introduit dans la réaction en une quantité introduisant 0,1 à 2 ppm en masse de métal élémentaire, sur la base de la masse du polyalcène.

5. Procédé suivant l'une quelconque des revendications précédentes, dans lequel ledit métal dudit au moins un composé métallique est choisi dans le groupe consistant en Ti, Fe, Sn, Co, Ni, Cu, Zn et Al.

6. Procédé suivant la revendication 5, dans lequel ledit métal dudit au moins un composé métallique est choisi dans le groupe consistant en Fe, Co, Ni et Cu.

7. Procédé suivant la revendication 6, dans lequel ledit métal dudit au moins un composé métallique est Fe.

8. Procédé suivant l'une quelconque des revendications précédentes, dans lequel ledit composé métallique est un composé métallique soluble dans un polyalcène.

9. Procédé suivant la revendication 8, dans lequel ledit au moins un composé métallique soluble dans un polyalcène est choisi dans le groupe consistant en le naphténate de Fe, le néodécanoate de Fe(III), le 2-éthylhexanoate de Fe(III), l'acétylacétonate de Fe(III) et le stéarate de Fe(II).

10. Procédé suivant l'une quelconque des revendications précédentes, dans lequel ledit polyalcène est le polyisobutylène, ledit acide, anhydride ou ester mono- ou dicarboxylique à mono-insaturation oléfinique est choisi dans le groupe consistant en l'acide fumarique, l'acide itaconique, l'acide maléique, l'anhydride maléique, l'acide chloromaléique, l'anhydride chloromaléique, l'acide acrylique, l'acide méthacrylique, l'acide crotonique, l'acide cinnamique et les esters alkyliques en $C_1$ à $C_4$ de ces acides, et ledit halogène est le chlore ou le brome.

11. Procédé suivant la revendication 10, dans lequel ledit polyalcène est le polyisobutylène, ledit acide, anhydride ou ester mono- ou dicarboxylique à mono-insaturation oléfinique est l'anhydride maléique et ledit halogène est le chlore.

12. Procédé suivant la revendication 10 ou 11, dans lequel ledit polyisobutylène a une moyenne en nombre du poids moléculaire ($\overline{M}n$) de 900 à 3000.

13. Procédé suivant l'une quelconque des revendications 10 à 12, dans lequel ledit polyisobutylène contient plus de 60 % de groupes terminaux insaturés tri- et tétra-substitués.

14. Procédé suivant l'une quelconque des revendications 10 à 13, dans lequel ledit polyisobutylène est dérivé d'un courant d'alimentation en $C_4$ dérivé du pétrole contenant 10 à 75 % en masse d'isobutène, sur la base de la masse totale de l'oléfine.

15. Procédé suivant l'une quelconque des revendications précédentes, dans lequel (A) ledit au moins un acide, anhydride ou ester mono- ou dicarboxylique à mono-insaturation oléfinique et (B) ledit polyalcène sont chargés pour la réaction en un rapport molaire (A/B) de 0,9 à 2,5.

16. Procédé suivant la revendication 15, dans lequel (C) ledit halogène est introduit dans la réaction en un rapport molaire (C/B) de 1,2 à 3,5.

**17.** Procédé suivant l'une quelconque des revendications précédentes, dans lequel ledit au moins un acide, anhydride ou ester mono- ou dicarboxylique à mono-insaturation oléfinique et ledit polyalcène sont amenés à réagir l'un avec l'autre pendant 1 à 15 heures, à une température de 100°C à 250°C.

**18.** Procédé suivant la revendication 17, dans lequel la température est élevée au cours de la réaction et l'introduction dudit halogène débute à une température de 100°C à 170°C, et se termine à une température de 180°C à 250°C.

**19.** Procédé suivant l'une quelconque des revendications précédentes, dans lequel 8 % en masse à 35 % en masse de la quantité totale d'halogène sont introduits dans la réaction par heure.

**20.** Procédé suivant l'une quelconque des revendications précédentes, dans lequel au moins 70 % en masse dudit halogène sont introduits dans la réaction avant que le mélange réactionnel n'atteigne 180°C.

**21.** Procédé suivant l'une quelconque des revendications précédentes, dans lequel le composé métallique est le néodécanoate de Fe(III).

**22.** Procédé suivant l'une quelconque des revendications précédentes, dans lequel ledit produit du type acide carboxylique, anhydride carboxylique ou ester carboxylique à substituant polyalcène a une fonctionnalité de 1,2 à 1,7.

**23.** Procédé suivant l'une quelconque des revendications précédentes, dans lequel ledit polyalcène et ledit au moins un acide, anhydride ou ester mono- ou dicarboxylique à mono-insaturation oléfinique sont amenés à réagir en l'absence de métal élémentaire et composés métalliques insolubles dans le polyalcène.

**24.** Procédé suivant l'une quelconque des revendications 1 à 4, dans lequel ledit composé métallique est choisi parmi les composés de Ni et Cu solubles dans le polyalcène et lesdits composés de Ni et Cu solubles dans le polyalcène sont choisis dans le groupe consistant en le 2-éthylhexanoate de Ni(II), le 2-éthylhexanoate de Cu(II) et l'acétate de Cu(I).

**25.** Utilisation d'au moins un composé métallique dans une réaction, assistée par halogène, d'un polyalcène, tel que défini dans l'une quelconque des revendications 1 à 24, et d'au moins un acide, anhydride ou ester mono- ou dicarboxylique à mono-insaturation oléfinique, tel que défini dans l'une quelconque des revendications 1 à 24, pour fournir un acide carboxylique, anhydride carboxylique ou ester carboxylique à substituant polyalcène ayant des teneurs réduites en halogène résiduel, dans laquelle le métal dudit au moins un composé métallique est choisi dans le groupe consistant en Mg, Ca, Ti, Zr, Hf, Cr, Mo, Mn, Fe, Co, Ni, Pd, Pt, Cu, Zn, Al et Sn et ledit au moins un composé métallique est présent en une quantité choisie pour introduire 0,01 à 5 ppm en masse de métal élémentaire, sur la base de la masse du polyalcène.

## REFERENCES CITED IN THE DESCRIPTION

**Patent documents cited in the description**

- US 3219666 A
- US 3215707 A
- US 3231587 A
- US 3361673 A
- US 4943671 A, Dockner
- US 5489390 A, Sivik
- US 5672266 A, Sivik
- US 5885944 A, Pudelski
- US 6077909 A, Pudelski
- EP 0684262 A
- EP 0665242 A
- US 6562904 B, Barini
- US 5498809 A
- US 5663130 A
- US 5705577 A
- US 5814715 A
- US 6022929 A
- US 6030930 A
- US 4952739 A
- US 3087936 A
- US 3172892 A
- US 3272746 A
- US 3275554 A
- US 3381022 A
- US 3442808 A
- US 3565804 A
- US 3912764 A
- US 4110349 A
- US 4234435 A
- GB 1440219 A
- US 6284717 B
- US 4857217 A
- US 4956107 A
- US 4963275 A
- US 5229022 A
- US 4102798 A
- US 4113639 A
- US 4116876 A
- US 5053152 A
- US 5565128 A
- US 5756431 A
- US 5792730 A
- US 5854186 A
- EP 208560 A
- US 3632511 A
- US 3254025 A